# EUROPEAN PATENT SPECIFICATION

(11) **EP 3 492 341 B1**
(45) Date of publication and mention of the grant of the patent: **21.10.2020**
(21) Application number: 17210966.2
(22) Date of filing: 28.12.2017
(51) Int. Cl.: B62B 3/02, B62B 3/10

(54) **MULTIFUNCTIONAL FOLDABLE TROLLEY**
MULTIFUNKTIONALER KLAPPBARER WAGEN
CHARIOT PLIABLE MULTIFONCTIONNEL

(30) Priority: 29.11.2017 US 201715825328
(43) Date of publication of application: 05.06.2019
(73) Proprietor: Zhuhai Shichang Metals Ltd, Zhuhai City, Guangdong 519045 (CN)
(72) Inventor: YU, Hai, Zhuhai City, Guangdong 519045 (CN); WANG, Che-Jen, Zhuhai City, Guangdong 519045 (CN)
(74) Representative: Boult Wade Tennant LLP

(56) References cited:
- EP-A2- 2 258 599
- WO-A1-2012/064849
- US-A- 2 621 815
- US-B1- 8 342 544
- US-B1- 8 641 061

## Description

This present disclosure relates to trolleys and carts. More particularly, the disclosure relates to a trolley that is multifunctional, easy to assemble, lightweight, and foldable so as to be easily storable without disassembly.

### BACKGROUND

Trolleys or carts of the type used to store and transport folding tables desire improvement.

The present disclosure relates to an improved multifunctional folding trolley.

Conventional trolleys are of fixed size, heavy, and are complicated to assemble and disassemble. Conventional trolleys are not foldable and require substantial space for storage, unless disassembled for storage. The complication of assembly and disassembly renders this option undesirable.

In addition, conventional trolleys for use with folding tables are typically made to fit a certain size and shape table. Thus, if one has a variety of table sizes and configurations to transport, one typically must have several different trolleys.

With the development of market demand, a new type of trolley is desired, the features of which are multifunctional, easy to assemble, lightweight, and foldable so as to be easily storable without disassembly.

Examples of existing trolleys include US 8 641 061, WO 2012/064849, US 2 621 815, and EP 2 258 599.

### SUMMARY

The disclosure advantageously provides improved trolley structures configured for use to carry both round and rectangular folding tables of a variety of sizes. Specifically, the present invention provides a trolley as set out in claim 1.

The trolley includes a frame having a floor located adjacent a loading end of the frame. The floor includes a planar central portion bounded on each side by angled ramp portions which terminate at elevated flat portions, one of the elevated flat portions being located adjacent the loading end of the frame; and a plurality of receivers located on the frame.

The trolley also includes a handle rack locatable at an end of the frame opposite the loading end of the frame. The handle rack includes a pair of rack legs, each rack leg having a handle rack mount located at a lower end of the rack leg and configured to be received by one of the receivers of the frame. The handle rack mounts cooperate with corresponding ones of the receivers of the frame to enable the handle rack to be mounted to the frame and selectively positioned in either an upright position relative to the frame or in a folded orientation wherein the handle rack is folded to a lowered position adjacent the frame.

The trolley also includes a pair of side rails locatable adjacent sides of the frame, the side rails including a pair of rail legs. Each rail leg has a rail mount located at a lower end of the rail leg and configured to be received by one of the receivers of the frame. The rail mounts cooperate with corresponding ones of the receivers of the frame to enable the side rails to be mounted to the frame and selectively positioned in either an upright position relative to the frame or in a folded orientation wherein the side rails are each folded to a lowered position adjacent the frame.

Trolleys according to the disclosure are multifunctional, foldable, and easily assembled and disassembled. The trolleys may also be easily adjusted to carry a variety of load sizes. In particular, the trolleys are configured for use to carry both round and rectangular folding tables of a variety of sizes.

### BRIEF DESCRIPTION OF THE DRAWINGS

Further advantages of the disclosure are apparent by reference to the detailed description in conjunction with the figures, wherein elements are not to scale so as to more clearly show the details, wherein like reference numbers indicate like elements throughout the several views, and wherein:

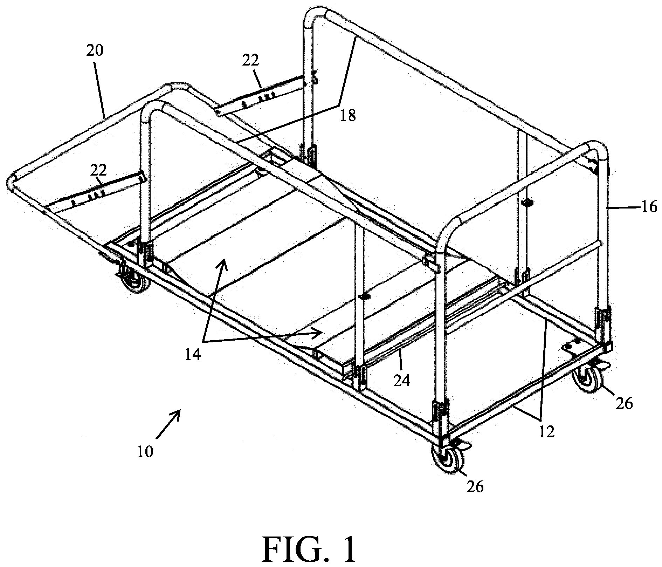

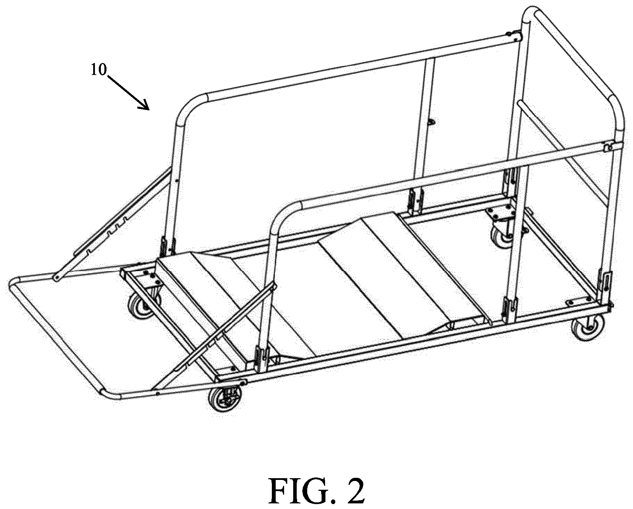

FIGS. 1 and 2 are perspective views of a foldable multifunctional trolley according to the disclosure.

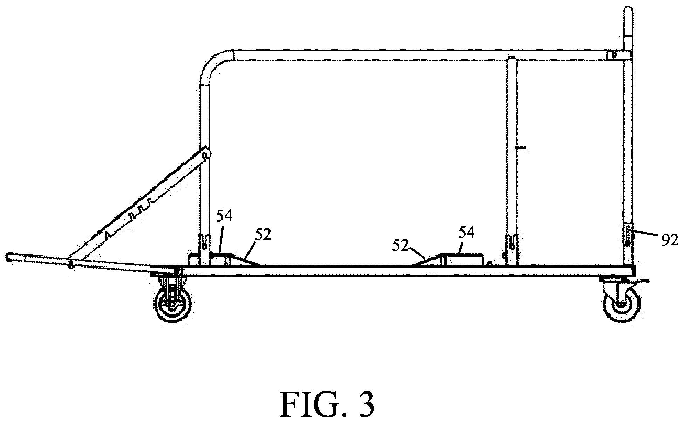

FIG. 3 is a side view of the trolley of FIGS. 1 and 2.

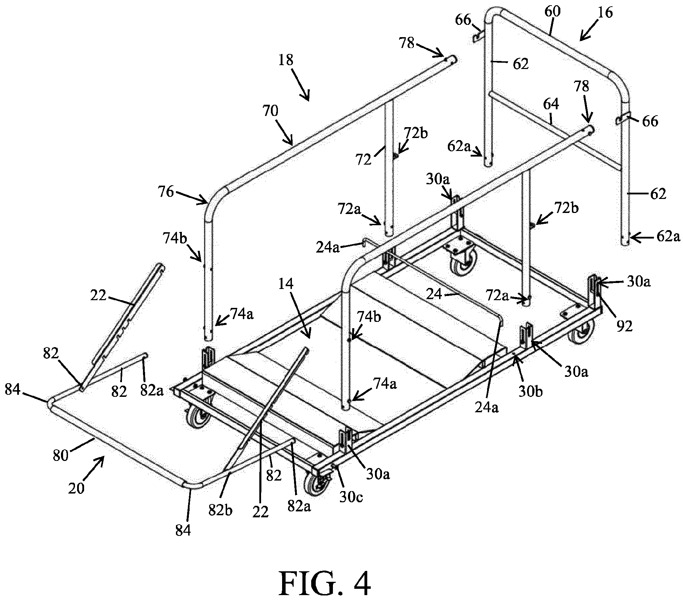

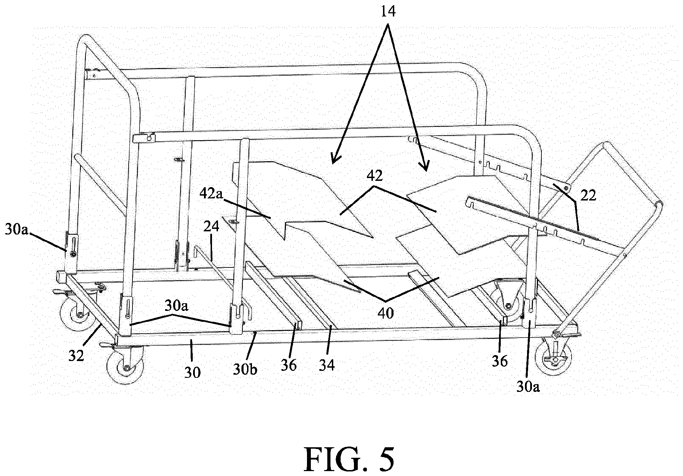

FIGS. 4 and 5 are exploded views of the trolley of FIGS. 1 and 2.
FIGS.6 and 7 show the trolley of FIGS. 1 and 2 in a folded configuration.
FIGS. 8-11 show positioning structures for folding components of the trolley of FIGS. 1 and 2.
FIG. 12 shows the trolley of FIG. 1 loaded to carry 1.22 m (four-foot) rectangular folding tables.
FIG. 13 shows the trolley of FIG. 1 loaded to carry 1.52 m (five-foot) rectangular folding tables.
FIG. 14 shows the trolley of FIG. 1 loaded to carry 1.83 m (six-foot) rectangular folding tables.
FIG. 15 shows the trolley of FIG. 1 loaded to carry 2.44 m (eight-foot) rectangular folding tables.
FIG. 16 shows the trolley of FIG. 1 loaded to carry 1.22 m (forty-eight inch) round folding tables.
FIG. 17 shows the trolley of FIG. 1 loaded to carry 1.52 m (sixty-inch) round folding tables.
FIG. 18 shows the trolley of FIG. 1 loaded to carry 1.60 m (sixty-three inch) round folding tables.
FIG. 19 shows the trolley of FIG. 1 loaded to carry 1.80 m (seventy-one inch) round folding tables.
FIG. 20 shows the trolley of FIG. 1 loaded to carry 1.83 m (seventy-two inch) round folding tables.
FIG. 21 shows the trolley of FIG. 1 loaded to carry a mixture of round and rectangular tables of the various sizes shown in FIGS. 8-16.
FIG. 22 is a perspective view of a foldable multifunctional trolley according to an alternate embodiment of the disclosure.
FIG. 23 shows the trolley of FIG. 22 in a folded configuration.
FIG. 24 is a closeup view showing a hinge structure of the trolley of FIG. 22.
FIG. 25 shows the hinge of FIG. 24.
FIG. 26 is an exploded view of the hinge of FIG. 25.
FIG. 27 depicts operation of the hinge.
FIG. 28 depicts use of the trolley of FIG. 22
FIG. 29 shows the trolley of FIG. 22 loaded to carry 1.22 m (forty-eight inch) round folding tables.
FIG. 30 shows the trolley of FIG. 22 loaded to carry 1.83 m (seventy-two inch) round folding tables.
FIG. 31 shows the trolley of FIG. 22 loaded to carry 1.83 m (six-foot) rectangular folding tables.
FIG. 32 shows the trolley of FIG. 22 loaded to carry 2.44 m (eight-foot) rectangular folding tables.

### DETAILED DESCRIPTION

With initial reference to the drawings, the disclosure relates to a foldable multifunctional trolley **10** having a frame **12** supporting a floor **14**, a handle rack **16**, side rails **18**, an adjustably positionable u-shaped gate **20**, gate adjusters **22**, and a load support 24. A plurality of wheels **26** are located on a bottom portion of the frame 12 to permit mobility of the trolley 10. The trolley 10 is advantageously configured to have improved structure, function and aesthetics. The components of the trolley 10 are desirably made of steel, with a powder coat finish for rust resistance.

The frame 12 may be provided as by a pair of side frame members **30** and a pair of end frame members **32**, each preferably made of steel. The frame members 30 and 32 may be welded or otherwise fixed together to provide the frame 12 in a rectangular configuration. The frame 12 includes floor supports **34** and **36** extend between the side frame members 30 for supporting the floor 14. The floor supports 34 and 36 are preferably made of steel and may be welded or otherwise fixed to the side frame members 30. The side rails 30 include mounts, such as receivers **30a** for cooperating with the handle rack 16 and the side rails 18 for ease of assembly and disassembly. The side rails 12 include mounts, such as receivers **30b**, for cooperating with the support 24. The side rails include mounts, such as apertures into which pins **30c** are received, for pivotally mounting the u-shaped gate 20 to the frame 12.

The floor 14 is provided as by two pairs of angled steel plates **40** and **42** oriented with the plate 42 overlying the plate 40 to provide a reinforced floor construction. The plate 40 may be welded or otherwise affixed to the floor supports 34 and 36, with the plate 42 welded or affixed to the plate 40 and the floor support 36. In this regard, the plate 42 includes a lip **42a** that overlies the floor support 36. The floor 14 is located adjacent a loading end of the frame 12 and is configured to have a planar or flat central portion **50** bounded on each side by angled ramp portions **52**, which terminate at elevated flat portions **54**.

The handle rack 16 is used by a user to push the trolley 10 and is preferably of welded steel construction and is u-shaped with a lateral member **60** and two legs **62** depending from the ends of the lateral member 60. A cross member **64** extends between the legs 62. To facilitate ease of assembly and disassembly, the handle rack 16 includes mounts, such as hooks **66** welded thereto for releasably engaging and cooperating with the side rails 18 for quick connect and disconnect. Elbows **68** may be provided between the legs 62 and the lateral member 60 to provide a rounded appearance. Lower ends of the legs 62 includes mounts, such as pegs **62a** for cooperating with the receivers 30a of the side rails 30 of the frame 12.

The side rails 18 are preferably of welded steel construction and include a lateral member **70** and legs **72** and **74**. The leg 74 is located adjacent an end of the lateral member 70 and preferably connects thereto as by an elbow **76** to provide a rounded appearance. Mounts, such as pegs **78** are located adjacent the free end of the lateral member 70 for cooperating with the hooks 66 of the handle rack 16. Lower ends of the legs 72 include mounts, such as pegs **72a**, and lower ends of the legs 74 include mounts, such as pegs **74a**, for cooperating with the receivers 30a of the side rails 30 of the frame 12. Mid portions of the legs 72 include mounts, such as receivers **72b**, for cooperating with the support 24. Mid portions of the legs 74 include mounts, such as pegs **74b**, for cooperating with the leg adjusters 22.

The u-shaped gate 20 is preferably of welded steel construction and is u-shaped with a lateral member **80** and two legs **82** depending from the ends of the lateral member 80. Elbows **84** may be used to connect the legs 82 to the lateral member 80 to provide a rounded configuration. Lower ends of the legs 82 include receivers, such as apertures **82a**, for receiving the pins 30c of the frame 12 for pivotally mounting the u-shaped gate 20 to the frame 12. Mounts, such as apertures having pins **82b**, are located on upper portions of the legs 82 for pivotally mounting the gate adjusters 22 to the u-shaped gate 20.

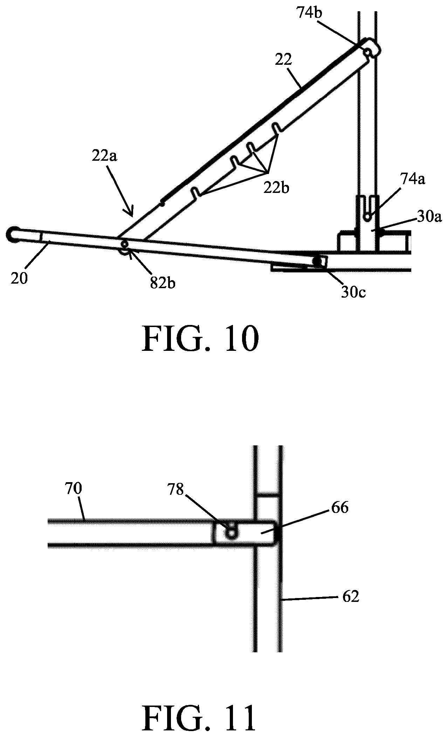

The gate adjusters 22 are preferably provided by flat steel bars. The gate adjusters 22 include a receiver, such as an aperture **22a**, adjacent one end, for cooperating with the pins 82b of the u-shaped gate 20 for pivotally mounting of the gate adjusters 22 to the u-shaped gate 20. Receivers, such as slots **22b**, are defined and spaced along an edge and the opposite end of the gate adjusters 22 for cooperating with the pegs 74b of the legs 74 for releasably affixing the gate adjusters 22 to the legs 74 of the trolley 10 (FIG. 10). Thus, the angle of the gate 20 relative to the frame 12 may be adjusted to a variety of angular orientations as may be desired for situating the gate 20 for a given load.

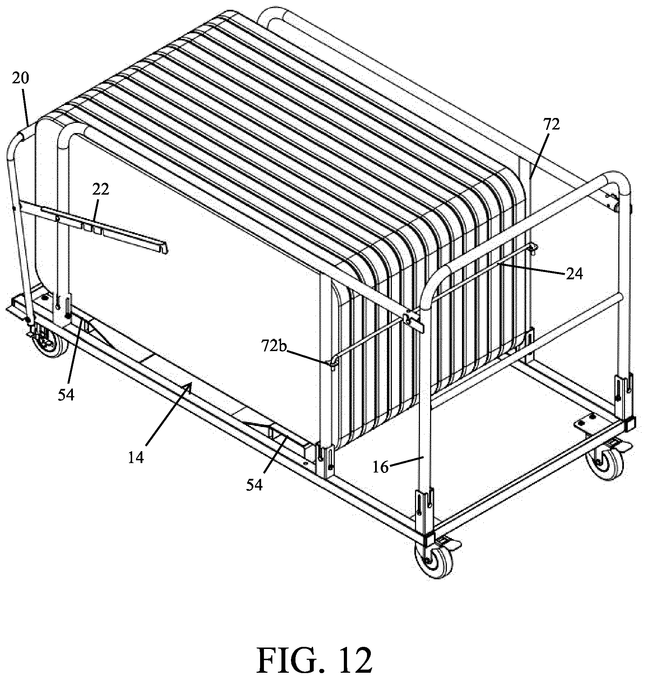

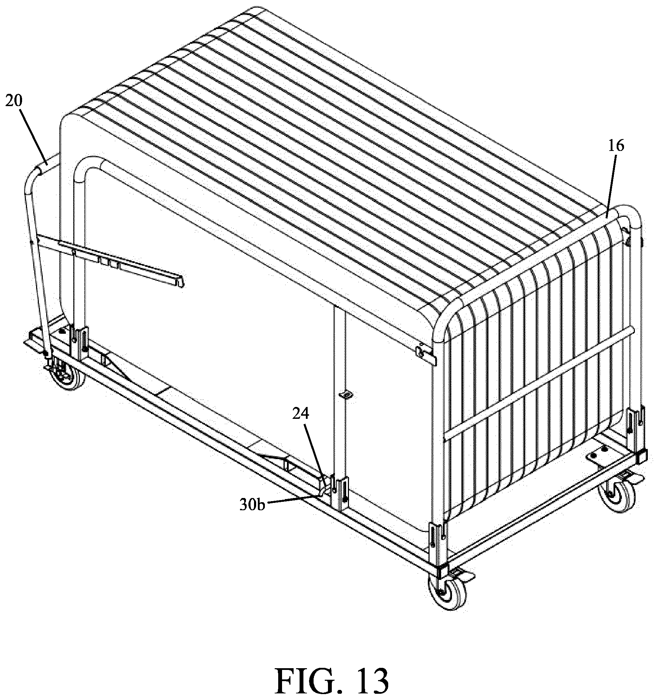

The load support 24 is preferably an elongate, stiff wire. The load support 24 can be positioned based on the load to be carried by the trolley 10. For example, as seen in FIG. 12, for a load such as shown of shorter tables, the load support 24 is desirably located in the receivers 72b of the legs 72 so as to provide a support to keep the tables from sliding toward the handle rack 16. Alternatively, if the load is longer tables, such as seen in FIG. 13, the load support 24 is located to be received by the receivers 30b of the frame 12 in an out of the way storage position.

The trolley 10 is easily assembled by installing the handle rack 16, the handle rack 16, the side rails 18, and the gate 20 onto the frame 12 by use of the cooperating mounts, which are configured for quick cooperation, and requiring no tools. Likewise, the trolley 10 may easily be disassembled by reversing the assembly.

The receivers 30a of the side rails 12 are configured to cooperate with the mounts, such as the pegs 62a of the legs 62 of the handle rack 16, to enable quick assembly and disassembly of the handle rack 16 from the frame 12. The receivers 30a cooperate with the pegs 62a to permit the handle rack to have a stable upright installation. For example, the receivers 30 may be provided as by upright cylinders having a plurality of longitudinal open slots **90** and closed slots **92** formed in their sidewall. The slots 90 and 92 are arranged to correspond to the locations of the pegs 62a to receive the pegs 62a to maintain the legs 62 in a stable and upright position. The receivers 30a and the pegs 62a also cooperate to permit the legs 62, and hence the handle rack 16, be foldable relative to the frame 12. The receivers 30 are shown as square cylinders, but may be round or other configuration to cooperate with the legs.

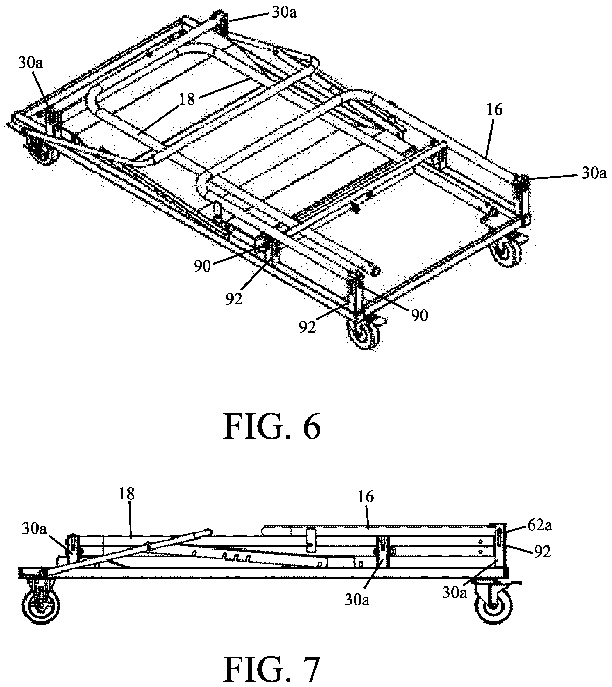

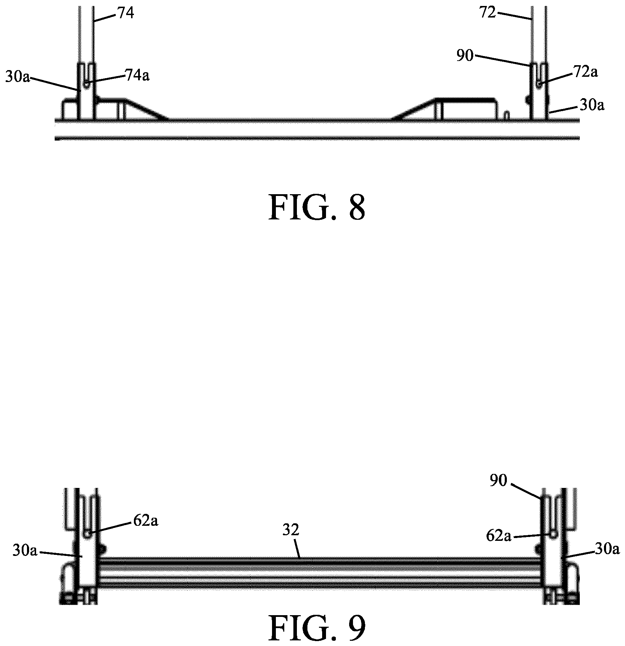

The receivers 30a of the side rails 18 are also configured to cooperate with the mounts of the side rails 18, such as the pegs 72a of the legs 72 and the pegs 74a of the legs 74 to provide a stable, upright position of the side rails 18, and to permit folding of the rails 18 if desired. As will be noted, the receivers 30 are of uniform structure which facilitates construction. However, the receivers 30a associated with the side rails 18 are oriented 90 degrees as compared to the receivers 30a associated with the handle rack 16. This desirably positions the open slots 92 to permit the respective directions of folding of the side rails 18 and the handle rack 16, as best seen in FIGS. 6-9. Thus, as shown, the trolley 10 may be easily folded for storage, and then unfolded for use.

The trolley 10 is also advantageously configured to be multifunctional and adaptable to carry a variety of loads. In particular, the trolley 10 is configured for use with folding tables. Conventional trolleys for use with folding tables are typically made to fit a certain size and shape table. The trolley 10 is advantageously configured to be adaptable to carry both round and rectangular tables of a variety of sizes. For example, FIGS. 12-20 show the trolley 10 adjustably configured to carry round and rectangular tables of a variety of sizes.

FIG. 12 shows the trolley 10 carrying 1.22 m (four-foot) rectangular folding tables. For this, the gate 20 is positioned to be substantially vertical, and the load support 24 is positioned in the receivers 72b of the legs 72 so as to provide a support to keep the tables from sliding toward the handle rack 16. The rectangular tables extend across the floor 14 and rest on the elevated flat portions 54 of the floor 14.

FIG. 13 shows the trolley 10 carrying 1.52 m (five-foot) rectangular folding tables. For this, the gate 20 is positioned to be substantially vertical, and the load support 24 is received by the receivers 30b of the frame 12 in an out of the way storage position.

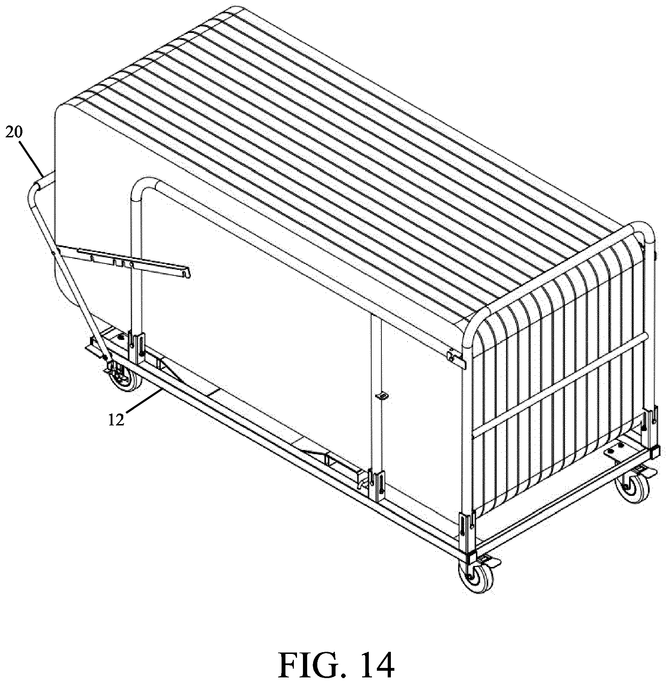

FIG. 14 shows the trolley 10 carrying 1.83 m (six-foot) rectangular folding tables. For this, the configuration is the same as shown in Fig. 13, except the gate 20 is angled slightly more away from the frame 12.

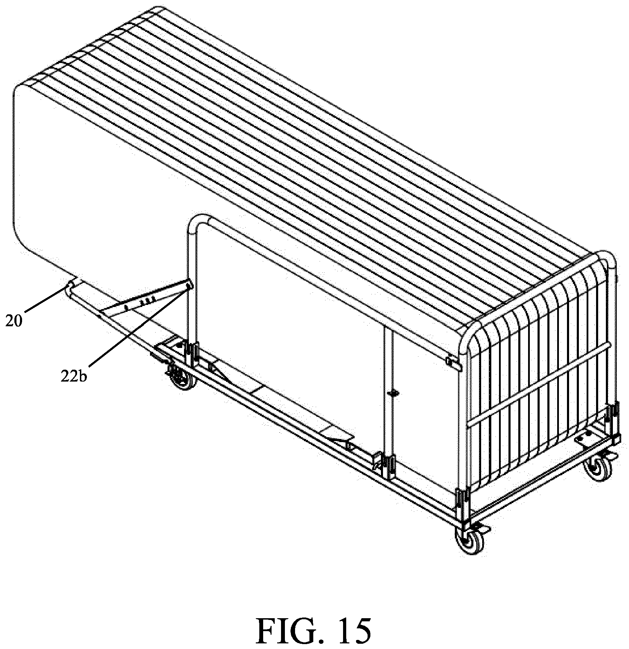

FIG. 15 shows the trolley 10 carrying 2.44 m (eight-foot) rectangular folding tables. For this, the configuration is the same as shown in Fig. 13, except the gate 20 is fully lowered.

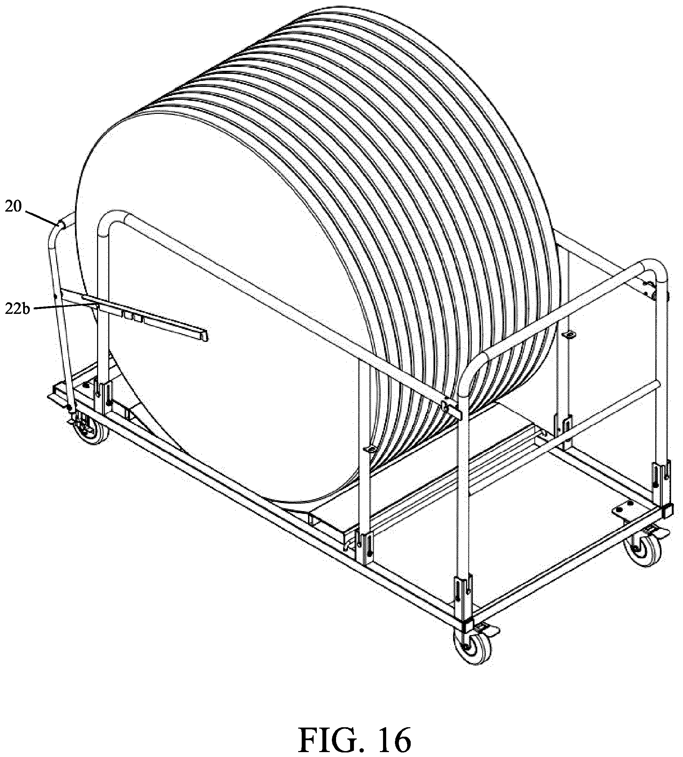

FIG. 16 shows the trolley 10 carrying 1.22 m (forty-eight inch) round folding tables. The load support 24 is not needed for round tables, and is hence located out of the way. The floor 14 is advantageously configured to receive and stabilize round tables of a variety of sizes. For carrying 1.22 m (forty-eight inch) round folding tables, the gate 20 is positioned to be substantially vertical.

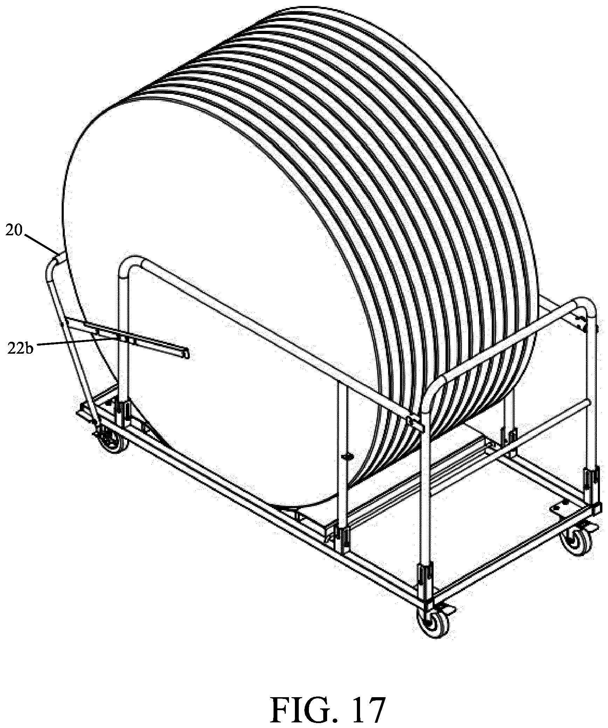

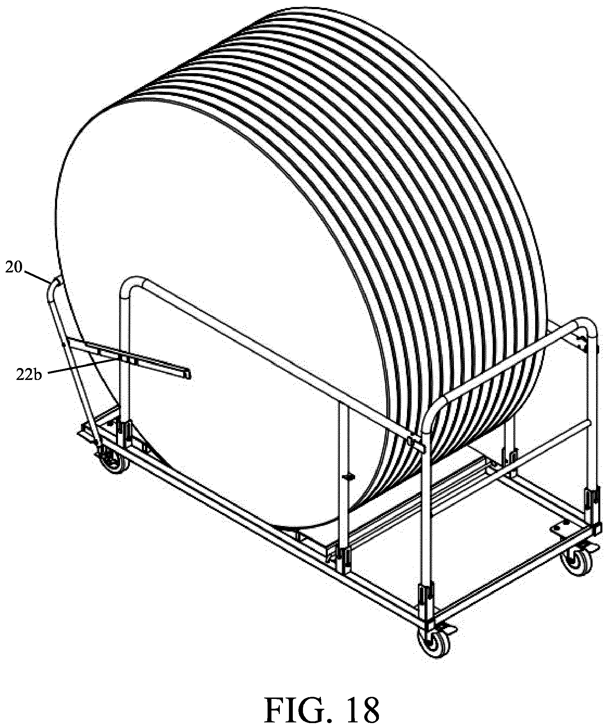

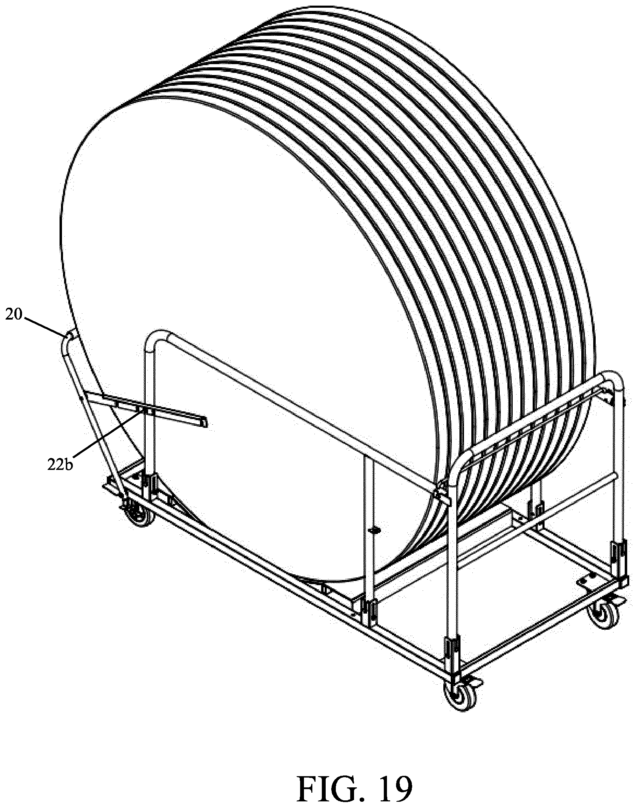

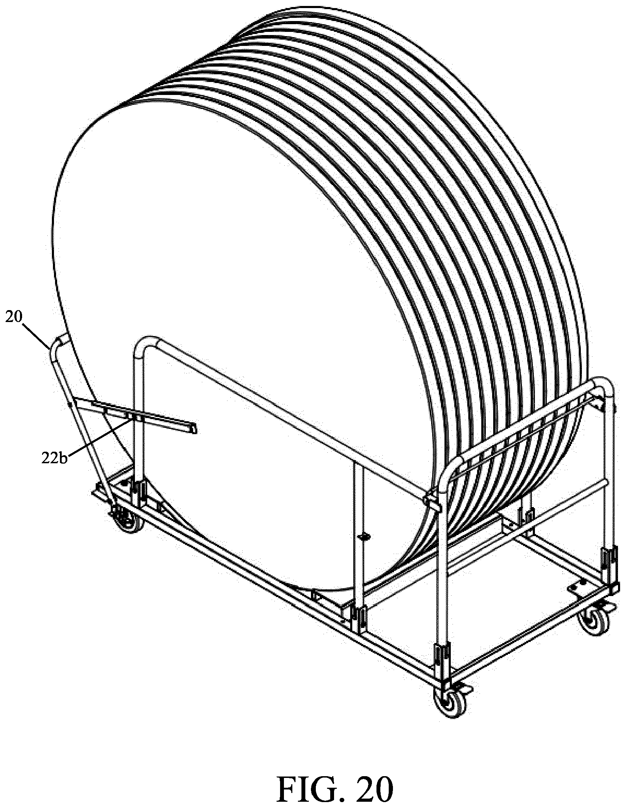

FIG. 17 shows the trolley 10 carrying 1.52 m (sixty inch) round folding tables; FIG. 18 shows the trolley 10 carrying 1.60 m (sixty-three inch) round folding tables; FIG. 19 shows the trolley 10 carrying 1.80 m (seventy-one inch) round folding tables; and FIG. 20 shows the trolley 10 carrying 1.83 m (seventy-two inch) round folding tables. As will be observed, the trolley 10 is configured as in the manner described in connection with FIG. 14, except as the size of the table increases, the angle of the gate 20 is adjusted more towards the horizontal by selecting the appropriate slot 22b for each of the adjusters 22 to cooperate with the pegs 74b of the legs 74 to provide the desired angle of the gate 20.

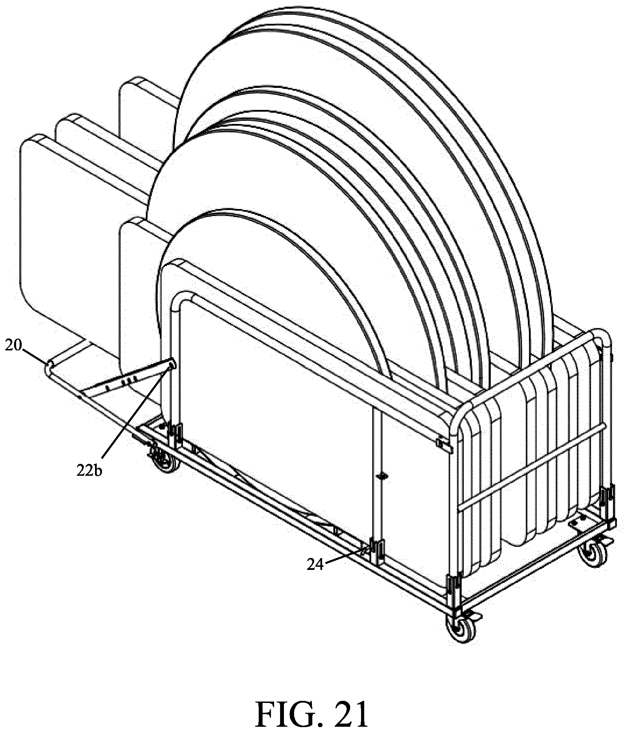

Turning now to FIG. 21, the trolley 10 is shown carrying a mixture of round and rectangular tables of the various sizes described above. For this, the load support 24 is located out of the way, and the gate 20 is adjusted to be substantially horizontal. As will be appreciated, the trolley 10 is advantageously configured to be easily assembled and disassembled, and also easily folded for storage. In addition, the trolley 10 is multifunctional and may be easily adjusted to carry a variety of load sizes. In particular, the trolley 10 is configured for use to carry both round and rectangular folding tables of a variety of sizes.

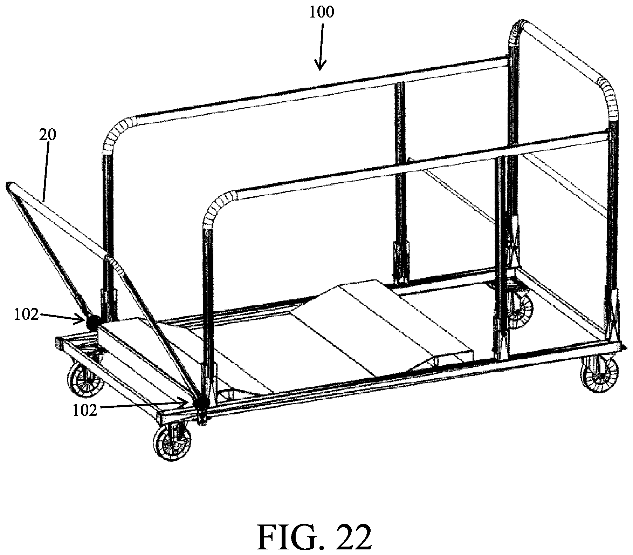

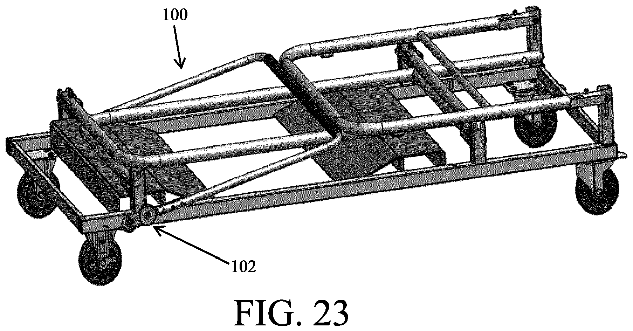

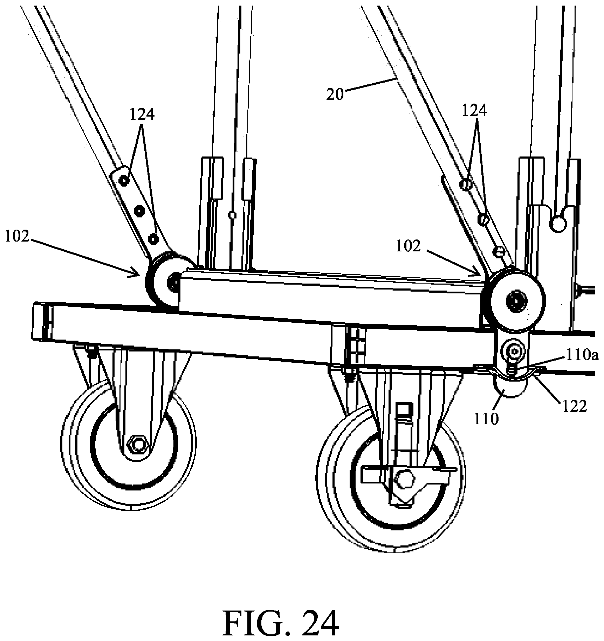

With reference now to FIGS. 22-32, there is shown another embodiment of a trolley **100**. The trolley 100 is substantially similar to the trolley 10, except u-shaped gate 20 is pivotally mounted to the side rails by adjustable angle hinges **102**. The hinges 102 eliminate the need for the gate adjusters 22 of the trolley 10, and function to enable adjustable positioning of the gate 20.

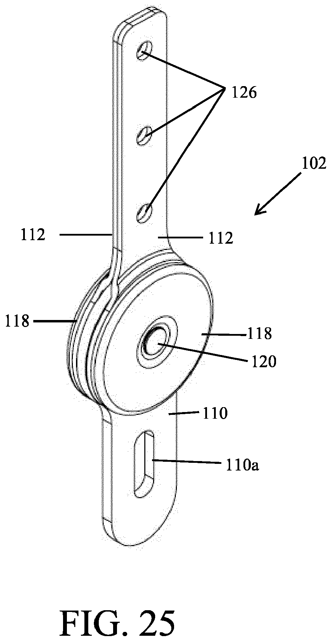

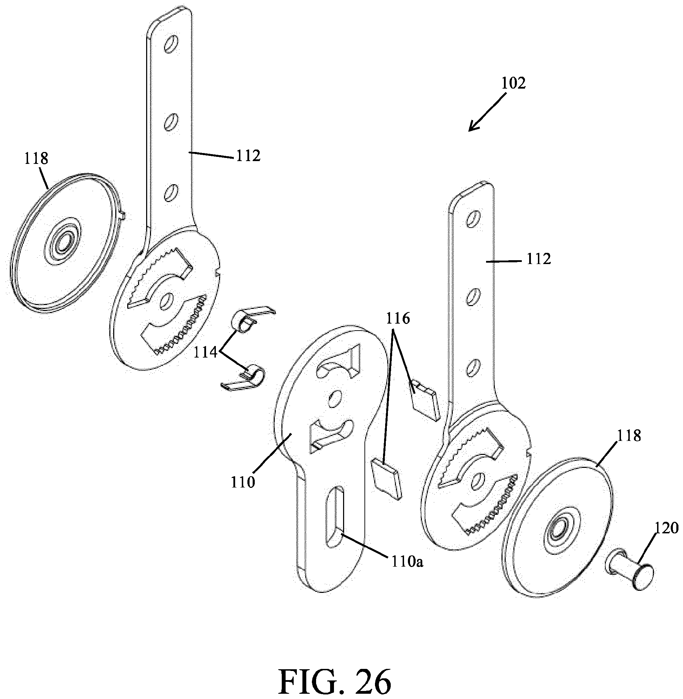

As best seen in FIGS. 25 and 26, the hinges 102 each include a fixed bracket **110**, rotatable brackets **112** located on opposite sides of the fixed bracket 110, springs **114**, stop plates **116**, cover plates **118** and rivet or hub **120**.

The hinges 102 mount to the side rails of the trolley 100 as by a fastener passed through a mounting slot **110a** of the fixed bracket 110 and into the side rail. A lower end of the fixed bracket 110 passes through and seats in a receiver **122** provided on the side rail 12. The hinges 102 are connected to the gate 20 as by fasteners **124** that may be passed through apertures in the lower ends of the gate 20 and corresponding apertures **126** in the rotatable brackets 112.

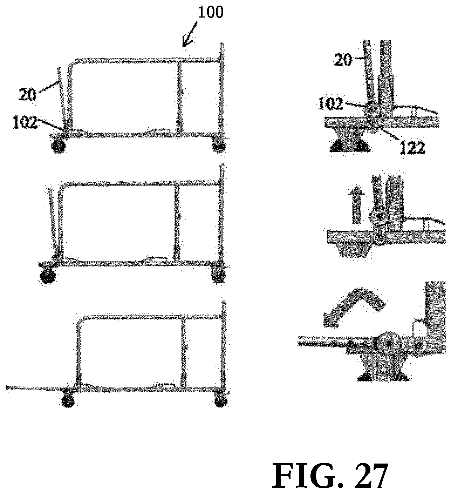

The springs 114 serve to bear the stop plates 116 in position to lock hinge 102 in an angular position. By lifting on the gate 20, the stop plates 116 are disengaged from engagement with the fixed bracket 110 and the hinge 102 is free to pivot. Once the gate 20 is in a desired orientation, the springs 114 return the stop plates 116 to engagement with the fixed bracket 110 and the hinge 102 is locked in place. Positioning of the gate 20 in this manner is shown in FIG. 27.

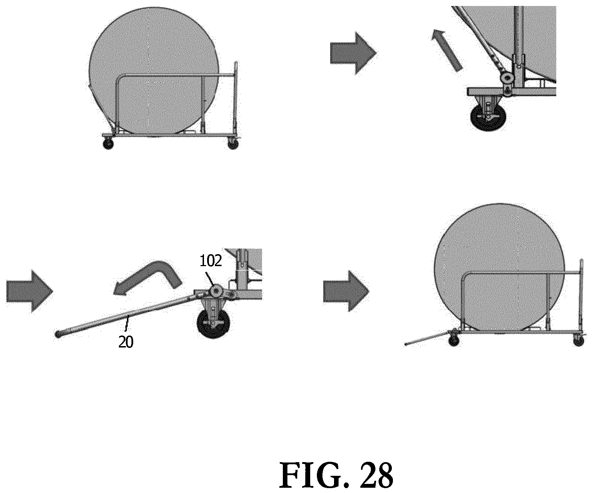

The range of motion of the hinge 102 also enables positioning of the gate 20 to facilitate loading and unloading of the trolley 100. As shown in FIG. 28, the hinge 102 enables the gate 20 to be lowered to the ground, which enables the gate 20 to provide a ramp structure for unloading (and loading) of tables from the trolley 100.

As in the case of the trolley 10, the trolley 100 is advantageously configured to be easily assembled and disassembled, and also easily folded for storage. In addition, the trolley 100 is multifunctional and may be easily adjusted to carry a variety of load sizes, and is configured for use to carry both round and rectangular folding tables of a variety of sizes.

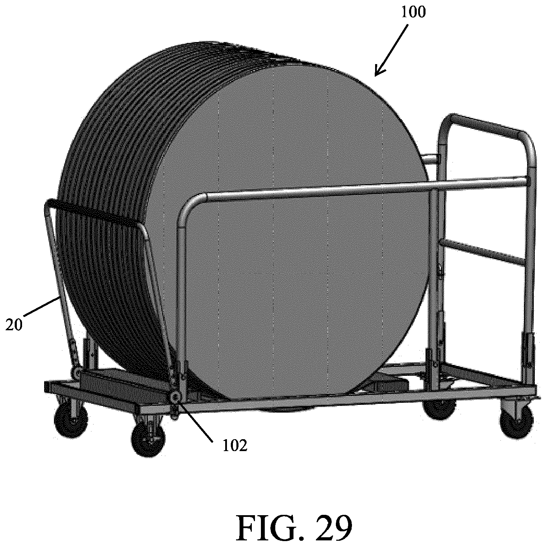

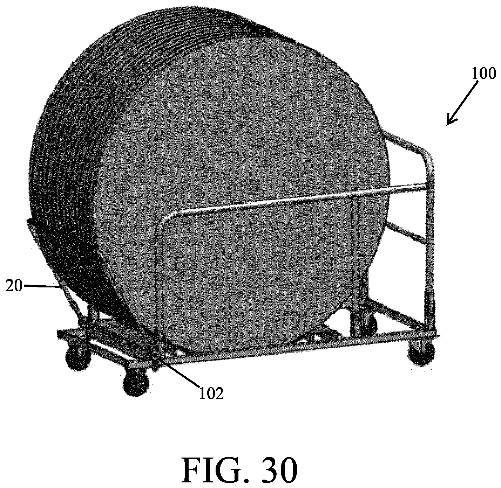

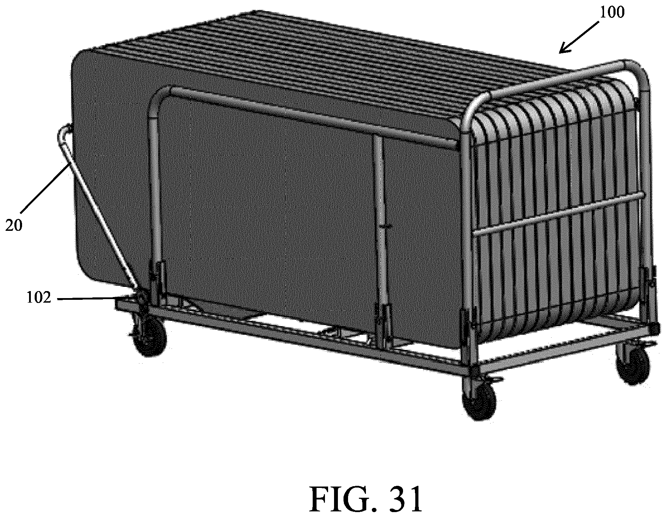

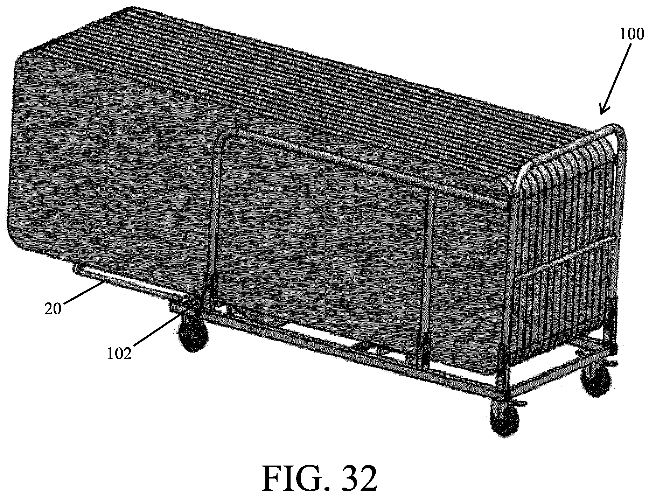

For example, FIG. 29 shows the trolley 100 loaded to carry 1.22 m (forty-eight inch) round folding tables. FIG. 30 shows the trolley 100 loaded to carry 1.83 m (seventy-two inch) round folding tables. FIG. 31 shows the trolley 100 loaded to carry 1.83 m (six-foot) rectangular folding tables. FIG. 32 shows the trolley 100 loaded to carry 2.44 m (eight-foot) rectangular folding tables.

## Claims

1. A trolley (10) configured for use to carry both round and rectangular folding tables of a variety of sizes, the trolley (10) comprising:
a frame (12) having a floor (14) located adjacent a loading end of the frame, the floor (14) defined by a planar central portion (50) bounded on each side by angled ramp portions (52) which terminate at elevated flat portions (54), one of the elevated flat portions being located adjacent the loading end of the frame;
a plurality of receivers located on the frame (12);
a handle rack (16) locatable at an end of the frame opposite the loading end of the frame, the rack (16) including a pair of rack legs (62), each rack leg (62) having a handle rack mount (66) located at a lower end of the rack leg and configured to be received by one of the receivers of the frame (30a), wherein the handle rack mounts (66) cooperate with corresponding ones of the receivers of the frame (30a) to enable the handle rack (16) to be mounted to the frame (12) and selectively positioned in either an upright position relative to the frame (12) or in a folded orientation wherein the handle rack (16) is folded to a lowered position adjacent the frame (12); and
a pair of side rails (18) locatable adjacent sides of the frame, the side rails (18) including a pair of rail legs (72, 74), each rail leg (72,74) having a rail mount located at a lower end of the rail leg (72,74) and configured to be received by one of the receivers of the frame (30a), wherein the rail mounts cooperate with corresponding ones of the receivers of the frame (30a) to enable the side rails (18) to be mounted to the frame (12) and selectively positioned in either an upright position relative to the frame (12) or in a folded orientation wherein the side rails (18) are each folded to a lowered position adjacent the frame (12); and **characterised in that**
the frame (12) includes floor supports (34, 36) and the floor (14) comprises two pairs of angled plates (40, 42), each pair having one plate overlying the other, with the overlying plate including a lip (42) that overlies one of the floor supports (34, 36).

2. The trolley (10) of claim 1, further comprising a load support (24) removably positionable to span between the side rails (18).

3. The trolley (10) of claim 1, further comprising a gate (20) pivotally mounted adjacent to the loading end of the trolley.

4. The trolley (10) of claim 3, further comprising a gate adjuster (22) operably associated with the gate (20) and one of the side rails (18) to adjustably position the gate (20) at a desired angle relative to the frame (12).

5. The trolley (10) of claim 3, further comprising a locking hinge (102) operably associated with the gate (20) to adjustably position the gate (20) at a desired angle relative to the frame (12).

6. The trolley (10) of any of the preceding claims, wherein the receivers (30a) on the frame (12) comprise upright cylinders having a plurality of longitudinal open slots (90) and closed slots (92) formed in their sidewall, and the mounts of the side rails and the handle rack comprise pegs (62a) that cooperate with the open slots (90) and the closed slots (92) to permit folding of the side rails (18) and the handle rack (16).

## Patentansprüche

1. Wagen (10), konfiguriert zur Verwendung zum Befördern von sowohl runden als auch rechteckigen Klapptischen unterschiedlicher Größen, wobei der Wagen (10) umfasst:
einen Rahmen (12) mit einem Boden (14), der benachbart zu einem Ladeende des Rahmens angeordnet ist, wobei der Boden (14) durch einen ebenen Mittelabschnitt (50) definiert ist, der auf jeder Seite durch abgewinkelte Rampenabschnitte (52) begrenzt ist, die in erhöhten flachen Abschnitten (54) enden, wobei einer der erhöhten flachen Abschnitte angrenzend an das Ladeende des Rahmens angeordnet ist;
eine Mehrzahl von Aufnahmen, die auf dem Rahmen (12) angeordnet sind;
ein Griffgestell (16), das an einem Ende des Rahmens gegenüber dem Ladeende des Rahmens platzierbar ist, wobei das Gestell (16) ein Paar Gestellschenkel (62) aufweist, wobei jeder Gestellschenkel (62) eine Griffgestellhalterung (66) aufweist, die an einem unteren Ende des Gestellschenkels angeordnet und konfiguriert ist, um von einer der Aufnahmen des Rahmens (30a) aufgenommen zu werden, wobei die Griffgestellhalterungen (66) mit entsprechenden der Aufnahmen des Rahmens (30a) zusammenwirken, um zu ermöglichen, dass das Griffgestell (16) an dem Rahmen (12) angebracht und wahlweise entweder in einer aufrechten Position relativ zu dem Rahmen (12) oder in einer geklappten Ausrichtung positioniert werden kann, in der das Griffgestell (16) in eine abgesenkte Position benachbart zu dem Rahmen (12) geklappt ist; und
ein Paar Seitenschienen (18), die benachbart zu Seiten des Rahmens platzierbar sind, wobei die Seitenschienen (18) ein Paar Schienenschenkel (72, 74) umfassen, wobei jeder Schienenschenkel (72, 74) eine Schienenhalterung aufweist, die an einem unteren Ende des Schienenschenkels (72, 74) angeordnet und konfiguriert ist, um von einer der Aufnahmen des Rahmens (30a) aufgenommen zu werden, wobei die Schienenhalterungen mit entsprechenden der Aufnahmen des Rahmens (30a) zusammenwirken, um zu ermöglichen, dass die Seitenschienen (18) an dem Rahmen (12) angebracht und wahlweise entweder in einer aufrechten Position relativ zu dem Rahmen (12) oder in einer geklappten Ausrichtung positioniert werden können, in der die Seitenschienen (18) jeweils in eine abgesenkte Position benachbart zu dem Rahmen (12) geklappt sind; und
**dadurch gekennzeichnet, dass**
der Rahmen (12) Bodenträger (34, 36) umfasst und der Boden (14) zwei Paare von abgewinkelten Platten (40, 42) umfasst, wobei jedes Paar eine Platte aufweist, die über der anderen liegt, wobei die obenliegende Platte eine Lippe (42) umfasst, die über einem der Bodenträger (34, 36) liegt.

2. Wagen (10) nach Anspruch 1, ferner mit einem Lastträger (24), der entfernbar positioniert werden kann, um sich zwischen den Seitenschienen (18) zu erstrecken.

3. Wagen (10) nach Anspruch 1, ferner mit einer Klappe (20), die schwenkbar benachbart zum Ladeende des Wagens angebracht ist.

4. Wagen (10) nach Anspruch 3, ferner mit einem Klappeneinsteller (22), der mit der Klappe (20) und einer der Seitenschienen (18) funktionell verbunden ist, um die Klappe (20) einstellbar in einem gewünschten Winkel relativ zum Rahmen (12) zu positionieren.

5. Wagen (10) nach Anspruch 3, ferner mit einem Verriegelungsscharnier (102), das funktionell mit der Klappe (20) verbunden ist, um die Klappe (20) in einem gewünschten Winkel relativ zum Rahmen (12) einstellbar zu positionieren.

6. Wagen (10) nach einem der vorhergehenden Ansprüche, bei dem die Aufnahmen (30a) auf dem Rahmen (12) aufrechte Zylinder mit einer Mehrzahl von in ihrer Seitenwand ausgebildeten offenen Längsschlitzen (90) und geschlossenen Schlitzen (92) sind, und die Halterungen der Seitenschienen und des Griffgestells Zapfen (62a) umfassen, die mit den offenen Schlitzen (90) und den geschlossenen Schlitzen (92) zusammenwirken, um ein Klappen der Seitenschienen (18) und des Griffgestells (16) zu ermöglichen.

## Revendications

1. Chariot (10) configuré pour être utilisé pour porter à la fois des tables pliantes rondes et rectangulaires d'une variété de tailles, le chariot (10) comprenant :
un cadre (12) ayant un plancher (14) positionné adjacent à une extrémité de chargement du cadre, le plancher (14) étant défini par une partie centrale plane (50) délimitée de chaque côté par des parties de rampe inclinées (52) qui se terminent au niveau de parties plates surélevées (54), l'une des parties plates surélevées étant positionnée adjacente à l'extrémité de chargement du cadre ;
une pluralité de récepteurs situés sur le cadre (12) ;
un bâti de poignée (16) pouvant être positionné à une extrémité du cadre opposée à l'extrémité de chargement du cadre, le support (16) comprenant une paire de jambes de support (62), chaque jambe de support (62) ayant une monture de bâti de poignée (66) positionnée à une extrémité inférieure de la jambe de support et configurée pour être reçue par l'un des récepteurs du cadre (30a), dans lequel les montures de bâti de poignée (66) coopèrent avec ceux correspondants des récepteurs du cadre (30a) pour permettre au bâti de poignée (16) d'être monté sur le cadre (12) et positionné sélectivement dans une position verticale par rapport au cadre (12) ou dans une orientation pliée où le bâti de poignée (16) est plié dans une position abaissée adjacente au cadre (12) ; et
une paire de rails latéraux (18) pouvant être positionnés sur des côtés adjacents du cadre, les rails latéraux (18) comprenant une paire de jambes de rail (72, 74), chaque jambe de rail (72, 74) ayant une monture de rail positionnée à une extrémité inférieure de la jambe de rail (72, 74) et configurée pour être reçue par l'un des récepteurs du cadre (30a), dans lequel les montures de rail coopèrent avec ceux correspondants des récepteurs du cadre (30a) pour permettre aux rails latéraux (18) d'être montés sur le cadre (12) et positionnés sélectivement dans une position verticale par rapport au cadre (12), dans une orientation pliée où les rails latéraux (18) sont pliés chacun dans une position abaissée adjacente au cadre (12) ; et **caractérisé en ce que**
le cadre (12) comprend des supports de plancher (34, 36) et le plancher (14) comprend deux paires de plaques inclinées (40, 42), chaque paire ayant une plaque sus-jacente l'autre, la plaque sus-jacente comprenant une lèvre (42) qui est sus-jacente à l'un des supports de plancher (34, 36).

2. Chariot (10) selon la revendication 1, comprenant en outre un support de charge (24) pouvant être positionné de manière amovible pour s'étendre entre les rails latéraux (18).

3. Chariot (10) selon la revendication 1, comprenant en outre une porte (20) montée de manière pivotante adjacente à l'extrémité de chargement du chariot.

4. Chariot (10) selon la revendication 3, comprenant en outre un dispositif de réglage de porte (22) associé de manière fonctionnelle à la porte (20) et à l'un des rails latéraux (18) pour positionner de manière réglable la porte (20) sur un angle souhaité par rapport au cadre (12).

5. Chariot (10) selon la revendication 3, comprenant en outre une charnière de verrouillage (102) associée de manière fonctionnelle à la porte (20) pour positionner de manière réglable la porte (20) sur un angle souhaité par rapport au cadre (12).

6. Chariot (10) selon l'une quelconque des revendications précédentes, dans lequel les récepteurs (30a) sur le cadre (12) comprennent des cylindres verticaux ayant une pluralité de fentes longitudinales ouvertes (90) et de fentes fermées (92) formées dans leur paroi latérale, et les montures des rails latéraux et du bâti de poignée comprennent des chevilles (62a) qui coopèrent avec les fentes ouvertes (90) et les fentes fermées (92) pour permettre un pliage des rails latéraux (18) et du bâti de poignée (16).
